# FASCICULE DE BREVET EUROPEEN

(11) **EP 3 554 923 B1**
(45) Date de publication et mention de la délivrance du brevet: **24.02.2021**
(21) Numéro de dépôt: 17808554.4
(22) Date de dépôt: 13.11.2017
(51) Int. Cl.: B62D 25/02, B62D 21/15, B62D 25/20

(54) **STRUCTURE DE SOUBASSEMENT D'UN VÉHICULE AUTOMOBILE, NOTAMMENT HYBRIDE, ADAPTÉE POUR UN CHOC LATÉRAL**
UNTERBODENSTRUKTUR EINES KRAFTFAHRZEUGS, INSBESONDERE EINES HYBRIDKRAFTFAHRZEUGS, DIE FÜR EINEN SEITLICHEN STOSS AUSGELEGT IST
UNDERBODY STRUCTURE OF AN AUTOMOTIVE VEHICLE, IN PARTICULAR A HYBRID AUTOMOTIVE VEHICLE, ADAPTED FOR A LATERAL SHOCK

(30) Priorité: 16.12.2016 FR 1662575
(43) Date de publication de la demande: 23.10.2019
(73) Titulaire: PSA Automobiles SA, 78300 Poissy (FR)
(72) Inventeur: BESSETTE, Damien, 25150 Ecot (FR); MERESSE, Ludovic, 25750 Arcey (FR)
(86) Numéro de dépôt international: PCT/FR2017/053098
(87) Numéro de publication internationale: WO 2018/109294

(56) Documents cités:
- DE-A1-102011 051 622
- FR-A1- 2 917 048
- FR-A1- 3 010 379
- JP-A- 2010 208 473
- JP-A- 2013 216 296
- JP-A- 2015 093 633
- JP-A- 2016 097 739
- JP-B2- 4 186 967
- US-B1- 8 661 617

## Description

La présente invention concerne une structure de soubassement d'un véhicule automobile, notamment du type hybride, adaptée pour un choc latéral.

Elle concerne également un véhicule automobile hybride équipé d'une telle structure de soubassement.

La structure de soubassement d'un véhicule automobile comprend le plancher notamment avant se prolongeant depuis son raccordement avec le tablier jusqu'à une zone située sensiblement sous la première rangée d'assises. Ce plancher avant est surplombé de deux traverses d'assises situées sensiblement sous la première rangée d'assises. Chaque traverse d'assise est fixée au plancher entre un tunnel central du véhicule, qui peut être un tunnel d'échappement, et un longeron fixé latéralement au plancher. Chaque longeron latéral comprend un élément de longeron interne et un élément de longeron externe situé en regard de la partie inférieure d'un côté d'habitacle.

En cas de choc latéral sur le véhicule, une partie des efforts résultant du choc transite par la structure de soubassement du véhicule. Un tel choc latéral peut être provoqué par un autre véhicule rentrant en collision avec le véhicule que l'on cherche à protéger ou d'une perte de contrôle du véhicule qui peut finir sa course contre un poteau.

Actuellement, le respect de la prestation choc latéral d'un véhicule est assuré par divers renforcements comprenant :
- un renforcement de chaque élément de longeron interne et/ou externe d'un longeron latéral,
- un renforcement du tunnel central par exemple par des cloisons,
- un renforcement du plancher par exemple par des traverses,
- un renforcement du pied milieu du véhicule et/ou
- un renforcement du pavillon du véhicule.

Ces différents renforcements permettent de limiter efficacement les intrusions dynamiques de portes dans l'habitacle du véhicule, les effondrements du tunnel engendrant des déchirures de plancher et les plis/déchirures du longeron latéral ayant subi le choc latéral. Ainsi, le véhicule, après choc latéral, reste visuellement acceptable de par notamment l'absence d'ouverture de portes et l'absence de déchirure notable du plancher et les critères biomécaniques des mannequins présents dans l'habitacle du véhicule sont conformes aux limites d'homologation et à l'obtention des cinq étoiles du système de notation de sécurité déterminée par les tests conçus et réalisés par EuroNCAP et ChinaNCAP.

Si ces divers renforcements donnent satisfaction pour des véhicules propulsés par des moteurs thermiques, il n'en est pas de même en ce qui concerne les véhicules hybrides rechargeables VHR ou PHEV (Plug-in Hybrid Electric Vehicle).

En effet, ces véhicules hybrides rechargeables intègrent des batteries et des équipements spécifiques qui induisent une charge supplémentaire d'environ 300 kgs par rapport aux véhicules thermiques.

Ainsi, les renforcements classiques des moteurs thermiques ne sont pas suffisants pour absorber efficacement un choc latéral aux véhicules hybrides et il serait alors nécessaire de combiner plusieurs renforcements pour se rapprocher de l'objectif d'absorber efficacement le choc latéral, ce qui augmenterait alors non seulement la masse du véhicule hybride, mais également les coûts de fabrication de celui-ci.

Les documents FR2917048 et FR3010379 divulguent une structure de véhicule automobile adaptée pour un choc latéral et comprenant notamment un côté d'habitacle comportant une peau externe de porte, un longeron situé en partie inférieure de la structure latérale du véhicule et comportant un élément extérieur, un élément intérieur et un élément de longeron de renfort fixé dans le caisson longitudinal formé par les éléments extérieur et intérieur du longeron situé en partie inférieure du côté d'habitacle. Une boîte creuse métallique est fixée sur la porte du véhicule par l'intermédiaire d'une doublure et qui, lors d'un choc latéral, prend appui sur la partie inférieure pour transmettre alors les efforts reçus à la traverse de soubassement disposée en regard de la partie inférieure et transversalement à celle-ci.

Une telle structure de véhicule est extrêmement complexe, coûteuse et pas du tout adaptée à un véhicule hybride rechargeable.

La présente invention a pour but de pallier les inconvénients ci-dessus de l'art antérieur.

A cet effet, l'invention propose une structure de soubassement d'un véhicule, notamment automobile, comprenant un plancher et deux longerons fixés latéralement au plancher, chaque longeron comprenant un élément de longeron interne et un élément de longeron externe situé en regard de la partie inférieure d'un côté d'habitacle du véhicule et qui est caractérisée en ce qu'elle comprend un élément de renfort longiligne d'absorption d'un choc latéral, logé dans l'espace entre l'élément de longeron externe et la partie inférieure du côté d'habitacle et solidaire de la face externe de l'élément de longeron externe, l'élément de renfort longiligne présentant en section transversale une forme en W couché et asymétrique de manière que l'ondulation inférieure de la forme en W de l'élément de renfort longiligne ait une amplitude supérieure à l'amplitude de l'ondulation supérieure de l'élément de renfort longiligne.

Avantageusement, l'élément de renfort longiligne est un profilé métallique en tôle fixé par soudage à la face externe de l'élément de longeron externe le long de ce dernier.

La structure de soubassement comprend une traverse d'assise fixée sur le plancher entre chaque longeron latéral et un tunnel central solidaire du plancher.

L'élément de renfort longiligne a une épaisseur d'environ 1,8 mm.

Le véhicule est du type hybride.

L'invention vise également un véhicule automobile hybride, caractérisé en ce qu'il comprend une structure de soubassement telle que définie précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue en perspective de l'élément de renfort de l'invention fixé à un longeron latéral d'une structure de soubassement d'un véhicule ;
- la figure 2 est une vue en coupe dans un plan transversal au véhicule et passant par une traverse d'assise avant du véhicule ; et
- les figures 3A à 3C sont des vues en coupe semblable à la vue en coupe de la figure 2 et représentant les différentes phases de chargement lors d'un choc latéral du longeron latéral pourvu de l'élément de renfort de l'invention.

L'invention qui va être décrite ci-dessous s'applique à un véhicule hybride rechargeable VHR.

En se reportant aux figures, la référence 1 désigne une structure de soubassement du véhicule hybride comprenant un plancher 2 qui peut être dans le cas présent le plancher avant qui se prolonge depuis son raccordement avec le tablier jusqu'à une zone située sensiblement sous la première rangée d'assises.

Le plancher avant 2 est surplombé d'une traverse d'assise 3 fixée à ce plancher et qui est située sensiblement sous une assise de siège de la première rangée.

La traverse d'assise 3, qui vient fixer et maintenir le siège avant, est disposée entre un tunnel central 4, tel qu'un tunnel d'échappement ou de transmission, solidaire du plancher 2 et un longeron latéral 5 solidaire latéralement du plancher 2.

Bien entendu, la structure de soubassement 1 comprend une autre traverse d'assise solidaire du plancher 2 et disposée entre le tunnel central 4 et l'autre longeron latéral solidaire latéralement du plancher 2, laquelle autre traverse d'assise est située sensiblement sous l'assise de l'autre siège avant de la première rangée d'assises.

Chaque longeron latéral 5 comprend un élément de longeron interne 6 et un élément de longeron externe 7 assemblé par soudage au longeron interne 6.

Les deux éléments de longeron interne 6 et externe 7 sont constitués par des profilés métalliques en tôle conformés de telle manière que le longeron 5 soit constitué par un corps creux longiligne.

La face 7a de l'élément de longeron externe 7 faisant face à l'extérieur du véhicule est couverte par la partie inférieure 8a d'un côté d'habitacle 8 qui se présente sous la forme d'une plaque ou peau externe de tôle et destinée à habiller l'élément de longeron externe 7. Un espace E est délimité entre la partie inférieure 8a du côté d'habitacle 8 et l'élément de longeron externe 7.

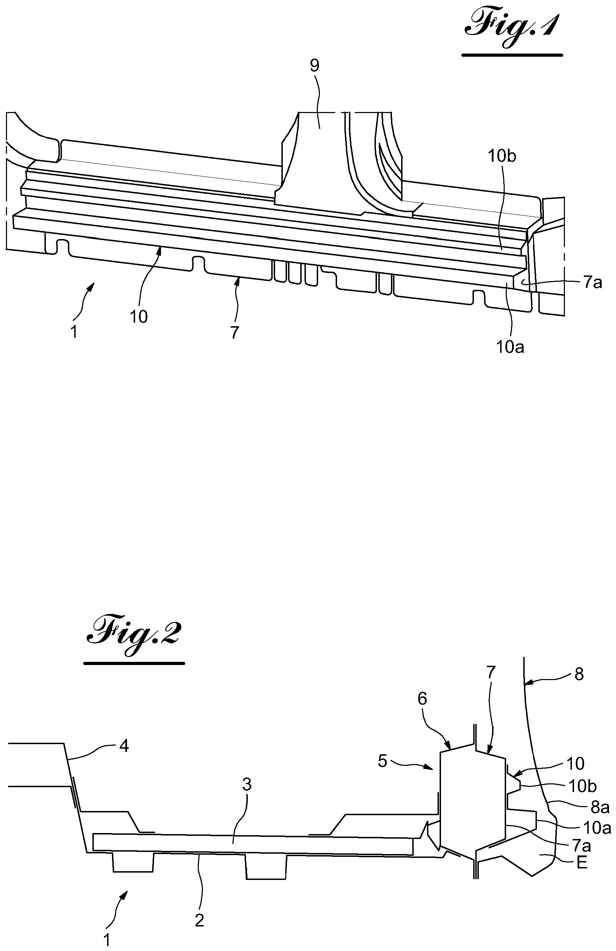

Un montant central 9, appelé pied milieu, et partiellement représenté en figure 1, relie chaque longeron latéral de soubassement 5 au pavillon, non représenté, du véhicule hybride, ce montant central permettant de séparer les portes avant et arrière de ce véhicule.

Selon l'invention, la structure de soubassement 1 comprend en outre un élément de renfort longiligne 10 permettant d'absorber un choc latéral appliqué au véhicule et qui est logé dans l'espace E entre l'élément de longeron externe 7 et la partie inférieure 8a du côté d'habitacle 8.

L'élément de renfort longiligne 10 est solidaire, par exemple par soudage, de la face externe 7a de l'élément de longeron externe 7 en s'étendant tout le long de ce dernier et présente en section transversale une forme en W couché et asymétrique de manière que l'ondulation inférieure 10a de l'élément de renfort longiligne 10 ait une amplitude supérieure à l'amplitude de l'ondulation supérieure 10b de l'élément de renfort longiligne 10.

De préférence, l'élément de renfort longiligne 10 est un profilé métallique en tôle d'une épaisseur d'environ 1,8 mm.

Ainsi, l'ondulation inférieure 10a de l'élément de renfort longiligne 10 présente un creux relativement à l'élément de longeron externe 7 d'un volume plus important que le volume du creux de l'ondulation supérieure 10b de l'élément de renfort longiligne 10.

Le fait que l'élément de renfort longiligne 10 soit en forme de W asymétrique permet un chargement asynchrone du longeron 5 en cas de choc latéral.

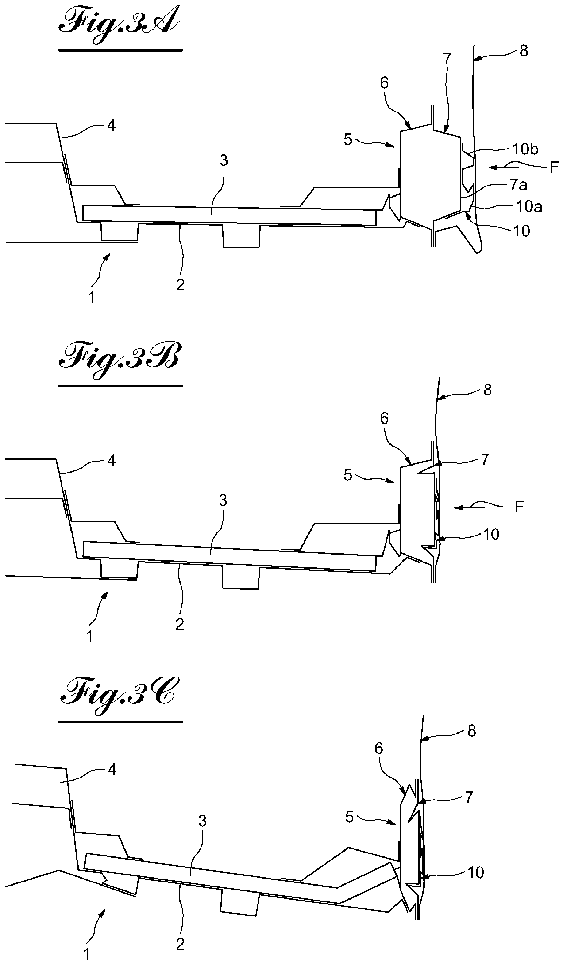

Les figures 3A à 3C représentent des phases de chargement par le bas du longeron 5 pourvu de l'élément de renfort asymétrique 10 en forme de W lors d'un choc latéral symbolisé par la flèche F aux figures 3A et 3B.

Ainsi, la figure 3A montre le chargement asynchrone par le bas de l'élément de renfort longiligne 10 en forme de W par le choc latéral, c'est-à-dire que l'ondulation inférieure 10a de plus grande amplitude s'écrase en premier. De la sorte, l'ondulation inférieure 10a de l'élément de renfort longiligne 10 absorbe déjà une partie de l'énergie de choc.

La figure 3B représente l'écrasement de l'ondulation supérieure 10b de l'élément de renfort longiligne 10 pour dissiper le maximum d'énergie du choc.

La figure 3C représente l'état final après choc montrant un bon chargement de la traverse d'assise 3 avec absence de rotation du longeron 5 autour de l'axe X parallèle à l'axe longitudinal du véhicule et un bon comportement global de la structure de soubassement.

L'espace E entre le côté d'habitacle 1 et l'élément de longeron extérieur 7 est utilisé pour loger l'élément de renfort longiligne 10 solidaire de l'élément de longeron externe 7 afin de pouvoir dissiper l'énergie du choc latéral au plus tôt tout en garantissant un chargement du longeron de manière asynchrone pour éviter sa rotation autour de l'axe X et permettant une bonne sollicitation de la traverse d'assise.

L'invention permet un bon comportement du véhicule en cas de choc latéral puisque induisant peu d'intrusion de porte dans l'habitacle du véhicule et, par conséquent, n'entraînant pas de forte dégradation des critères biomécaniques du côté d'habitacle. En d'autres termes, l'invention permet d'amener le véhicule hybride rechargeable au même niveau de prestation de choc latéral qu'un véhicule classique à propulsion thermique.

## Revendications

1. Structure de soubassement (1) d'un véhicule, notamment automobile, comprenant un plancher (2) et deux longerons (5) fixés latéralement au plancher (2), chaque longeron (5) comprenant un élément de longeron interne (6) et un élément de longeron externe (7) situé en regard de la partie inférieure (8a) d'un côté d'habitacle (8) du véhicule, **caractérisée en ce qu'**elle comprend un élément de renfort longiligne (10) d'absorption d'un choc latéral, logé dans l'espace (E) entre l'élément de longeron externe(7) et la partie inférieure (8a) du côté d'habitacle (8) et solidaire de la face externe (7a) de l'élément de longeron externe (7), l'élément de renfort longiligne (10) présentant en section transversale une forme en W couché et asymétrique de manière que l'ondulation inférieure (10a) de la forme en W de l'élément de renfort longiligne (10) ait une amplitude supérieure à l'amplitude de l'ondulation supérieure (10b) de l'élément de renfort longiligne (10).

2. Structure de soubassement selon la revendication 1, **caractérisée en ce que** l'élément de renfort longiligne (10) est un profilé métallique en tôle fixé par soudage à la face externe '(7a) de l'élément de longeron externe (7) le long de ce dernier.

3. Structure de soubassement selon la revendication 1 ou 2, **caractérisée en ce qu'**elle comprend une traverse d'assise (3) fixée sur le plancher (2) entre chaque longeron latéral et un tunnel central (4) solidaire du plancher (2).

4. Structure de soubassement selon la revendication 2 ou 3, **caractérisée en ce que** l'élément de renfort longiligne (10) a une épaisseur d'environ 1,8mm.

5. Structure de soubassement selon l'une des revendications 1 à 4, **caractérisée en ce que** le véhicule est du type hybride.

6. Véhicule automobile hybride, **caractérisé en ce qu'**il comprend une structure de soubassement (1) telle que définie dans l'une quelconque des revendications 1 à 5.

## Patentansprüche

1. Unterkonstruktion (1) für ein fahrzeug, insbesondere für ein kraftfahrzeug, mit einem boden (2) und zwei seitlich am boden (2) befestigten längsträgern (5), wobei jeder längsträger (5) ein inneres längselement (6) und ein äußeres längselement (7) aufweist, das dem unteren teil (8a) auf einer seite des innenraums (8) des fahrzeugs gegenüberliegt, **dadurch gekennzeichnet, dass** es im raum (e) zwischen dem äußeren längsträger (7) und dem unteren teil (8a) der fahrgastraumseite (8) ein längsträger (10) zur absorption eines seitlichen aufpralls, das mit der außenseite (7a) des äußeren längsteils (7) fest verbunden ist, wobei das längsträger-längselement (10) im querschnitt ausgebildet ist eine w-form, die so liegt und asymmetrisch ist, dass die untere welligkeit (10a) der w-form des langgestreckten verstärkungselements (10) eine amplitude aufweist, die größer ist als die amplitude der oberen welligkeit (10b) des langgestreckten verstärkungselements (10).

2. unterbau nach anspruch 1, **dadurch gekennzeichnet, dass** das längsträger-element (10) ein blechprofil ist, das an der außenseite '(7a) des längsträgerelements (7) entlang diesem befestigt ist.

3. Untergestell nach anspruch 1 oder 2, **dadurch gekennzeichnet, dass** es einen sitzbalken (3) umfasst, der auf dem boden (2) zwischen jedem seitenbalken befestigt ist, und einen mittigen tunnel (4), der fest mit dem boden (2) verbunden ist.

4. Untergestell nach anspruch 2 oder 3, **dadurch gekennzeichnet, dass** das langgestreckte verstärkungselement (10) eine dicke von etwa 1,8 mm aufweist.

5. Untergestell nach einem der ansprüche 1 bis 4, **dadurch gekennzeichnet, dass** das fahrzeug vom hybrid-typ ist.

6. Hybridkraftfahrzeug, **dadurch gekennzeichnet, dass** es eine unterbaustruktur (1) nach einem der ansprüche 1 bis 5 umfasst.

## Claims

1. Underlying structure (1) of a vehicle, including a motor vehicle, comprising a floor (2) and two (5) longerons laterally attached to the floor (2), each longeron (5) comprising an internal longeron element (6) and an external longeron element (7) located next to the lower part (8a) of one side of the vehicle's interior (8), characterized as it includes longiline reinforcement element (10) for the absorption of a lateral shock, housed in the space (e) between the outer longeron element(7) and the lower part (8a) on the interior side (8) and the solidarity part of the outer face (7a) on the outer side of the outer longeron element (7), the longiline reinforcement element (10) having in section cross-sectional a layered and asymmetrical w shape so that the lower waviness (10a) of the w shape of the longiline reinforcement element (10) has an amplitude greater than the amplitude of the upper undulation (10b) of the longiline reinforcement element (10).

2. Underlying structure in accordance with claim 1, characterized as the longiline reinforcement element (10) is a metal sheet profile fixed by welding to the outer face '(7a) of the external longeron element (7) along the outer face.

3. Underlying structure according to claim 1 or 2, characterized as it includes a seat cross (3) fixed on the floor (2) between each side strand and a central tunnel (4) attached to the floor (2).

4. Underlying structure according to claim 2 or 3, **characterized by** the thickness of the london reinforcement element (10) of approximately 1.8mm.

5. Underlying structure according to one of claims 1 to 4, characterized as the vehicle is of the hybrid type.

6. Hybrid motor vehicle, **characterized in that** it includes a base structure (1) as defined in any claim 1 to 5.
